# EUROPEAN PATENT SPECIFICATION

(11) **EP 0 551 520 B1**
(45) Date of publication and mention of the grant of the patent: **20.12.1995**
(21) Application number: 92914080.4
(22) Date of filing: 03.07.1992
(51) Int. Cl.: B23H 7/02, B23H 7/04, B23H 7/10

(54) **WIRECUT ELECTRIC DISCHARGE MACHINING SYSTEM**
FUNKENEROSIONSDRAHTSCHNEIDEVORRICHTUNG.
SYSTEME D'USINAGE PAR DECHARGE ELECTRIQUE AVEC DECOUPAGE PAR FIL

(30) Priority: 05.07.1991 JP 165915/91
(43) Date of publication of application: 21.07.1993
(73) Proprietor: SODICK CO., LTD., Yokohama Kanagawa 222 (JP)
(72) Inventor: KANEKO, Yuji, Japax Inc., Nagatsuda Tech. Center, Yokohama--shi, Kanagawa 227 (JP); NISHIMURA, Hideo, Japax Inc., Nagatsuda Tech. Ctr., Yokohama-shi, Kanagawa 227 (JP)
(74) Representative: Kensett, John Hinton
(86) International application number: PCT/JP92/00846
(87) International publication number: WO 93/01018

(56) References cited:
- JP-A- 3 086 427
- JP-A-60 029 230
- JP-A-63 288 626

## Description

This invention relates to the detection of positions wherein spark discharges are generated in the axial direction of the wire electrode in wire cut electrical-discharge machining. For example, in the detection of wire electrode breaking and wear of both or either one of the upper and lower feeder members.

Wire cut electrical-discharge machining apparatus is an apparatus so designed that using a thin wire of about 0.05 to 0.35 mm diameter as an electrode tool, placing the interspace between a pair of positioning guide members into condition wherein displacing it by travelling axially on a renewing feed basis when a predetermined tension is applied to said thin wire electrode, opposing the workpiece to be machined from a direction at right angles to the axis of the wire electrode one another in relation spaced a very small gap, machining is done by generating spark discharges intermittently by voltage pulses applied across the wire electrode and the workpiece with a working fluid in the opposed gap. The apparatus gives a relative machining feed in the aforementioned opposed direction with the progress of machining. Therefore, machining will be interrupted as a result of wire electrode breakage unless settings of working conditions are controlled. Most of the more recent of such type of apparatus comprises a self-recovery means for wire electrode breaking; that is, a function to automatically insert through and joint the wire electrode. This is not necessarily 100% reliable, and also, even if done in good condition, takes time and generally impairs the machining accuracy and the like. It is preferable to avoid causing wire breakage. However, with this type of wire cut electrical-discharge machining, there are problems: machining with accuracy or high efficiency at higher speeds is difficult unless the working conditions, in particular electrical conditions, for example, pulse width, and pause-duration of voltage pulse and amplitude of the discharge current and machining feed control must be established and controlled so that the machining is done under the excessively loaded hard conditions having a higher risk of wire breakage, and moreover, to carry out precision machining by highly tensioning and setting the working conditions is disabled, without running the risk of wire breakage.

Therefore, recent types of wire cut electrical-discharge machining apparatus provide an arrangement to carry out various functions of detection and of control in order to prevent the wire electrode from breaking, and in the event of wire electrode breakage, the apparatus is arranged to quickly detect the break, carrying out a function of control to at least temporarily arrest supplying the machining voltage pulse or power system, travelling and moving actuation of the wire electrode, or a further function of control to at least temporarily arrest the machining action incorporating the stoppage of work fluid supply and machining feed and the like. This reduces malfunctions and abnormal failures on the workpiece, working fluid nozzle, supplying and travelling systems of the wire electrode and the like with the wire electrode breakage.

However, the foregoing broken-wire detection is not entirely satisfactory and also lacking in exactness, so that it has been difficult to avoid obstacles to machining process and accuracy due to the excess of detection and control, and problems involving failures resulting from a delay of adaptive control.

Various types of broken-wire detector or control devices already exist. However, most of those types act, for example on the supply and recovery sides of the wire electrode beyond the interspace between said pair of positioning guide members, and discriminate by detecting its looseness, partiality and the like with its breakage at locations such as the wire electrode travelling track and travel stringing member between said supply side guide member and the storage reel for unused wire electrode and/or between the said recovery side guide member and the recovery member for used wire electrode, respectively, using contact sensors such as limit switches and photodiode sensors, or by detecting the tension and the change in travelling speed of the wire electrode.

However, most wire breakage happens at a location on the workpiece in between said pair of guide members, and thus the indirect detection of the above described systems on the far portions away from the interspace between said pair of guide members from the position at which the breakage was caused, leads to a problem in exactness and the disadvantage of being late in detecting speed.

Laid-open Japanese Patent Application 53-68496, describes forming a current source supplying extra-weak currents not directly bestowed on working to the wire electrode from incoming members formed above and below the work table fixing the workpiece, and a current detector to detect the fluctuation of the extra-weak currents supplied to the wire electrode, thereby detecting that due to the break of said wire electrode, extra-weak currents supplied to the wire electrode drop to zero. This type of detector is so arranged that extra-weak currents are necessarily supplied from the current source to the incoming members above and below the workpiece, and therefore, has the disadvantage that in the case of the arrangement contacting the machining power system with the upper and lower feeder members and the workpiece, the extra-weak currents flow from said current source through the incoming line for machining power system at the time of breaking of the wire electrode, and then, to positively detect its condition is disabled. In some cases, for example, both ends or side piece and the like near the end of the broken wire electrode repeatedly make or break contact with such as the locations on the workpiece and the intervening material adjacent to the wire electrode travelling track for a short while after breaking, and the extra-weak currents will not be cut out immediately and completely. Thus a delay in detection may occur.

In addition, as described above, the present invention is concerned with an improvement of wear detection for both or either one of feeder members, however, this is because, in some cases, it opens to said wear detection in the case of a certain kind of method to electrically detect breakage of said wire electrode by using an incoming-feeder circuit through the feeder members.

The wire cut electrical-discharge machines shown in Laid-Open Japanese Patent Application 60-108226, comprise a multitude of incoming members supplying working currents to a wire electrode via diodes so that the current flow in the same direction, and a voltage source causing a predetermined amount of direct or alternating current to flow through said feeder members into the wire electrode and an impedance element whereto currents are supplied from this voltage source. The wear of the feeder members or wire electrode breakage is detected by comparing the voltage between both ends of this impedance element with a reference value. Laid-Open Japanese Patent Application 63-109915, discloses an electrical-discharge machining circuit formed in between the feeder members whereby the electrical energy is supplied and the workpiece, a wire electrode breakage detecting circuit to catch a break of the wire electrode, a means to detect the current flowing from the electrical-discharge machining circuit into the wire electrode breakage detecting circuit at the time of the wear of feeding members, and a means to detect the machining speed. The period of time replacing the feeder members is represented by comparing the values detected by said current detecting means and machining speed detecting means with the respective detected values. However, both these wire electrode breakage detecting means have the problem of delay in detection which is carried out by flowing currents other than those for machining into the wire electrode in advance. Also, the fault detecting means in contacted feeding conditions under such a wear of the feeder members utilized the same detecting means as the wire electrode breakage detecting means having such a problem.

Laid-Open Japanese Patent Application 4-129617 shows a wire cut electrical-discharge machining apparatus, which is so arranged that existence of the abnormality is checked on the basis of the detected voltage, comprising a means detecting the voltage between the wire electrode and feeder members. In order for said voltage, at the location directly near the feeder members, to be detected, it is necessary to form a contact separated from said feeder members with respect to the detection of the wire electrode, and this leads to not only a complicated and costly arrangement, but also an abnormality in detecting conditions of said contact may be detected.

It is a general object of this invention to detect the wire electrode breakage at the locations to be machined by the wire electrode and thereabouts while machining; every time a spark discharge pulse occurs, detecting the position of said pulse in the axial direction of the wire electrode; and preferably, detecting the above generated position with accuracy; making a distinction between the cases where the spark-generating position is located within a workpiece thickness while in machining, and is beyond that; and detecting wire electrode breakage accurately, reliably and quickly at higher speeds through discrimination of wire electrode breakages in response to the frequency of occurrence of said position beyond the thickness.

It is a further object of this invention to provide that if a pulse at a position beyond the workpiece thickness has been detected, providing a feeder member wear detecting signal with the detection of said pulse of spark discharge; in the event that no breakage signal is delivered within a predetermined time after giving out said signal, a decision of wear of feeder members is made; and that a decision of which feeder member is worn, upper or lower, is made according to the position of said pulse of spark discharge beyond the thickness.

The invention is intended to detect wire electrode breaking and wear of feeder members, as above described, through detection of the spark-generating position by detecting the spark-generating position in the axial direction of the wire electrode in between the upper and lower feeder members arranged on both sides of the workpiece; that is, as to whether the electrical energy on the basis of machining voltage pulses supplied to the wire electrode through said feeder members from one terminal of the machining power system has been fed to the other terminal of said machining power system at which position along the workpiece thickness or after flowing through the intervening material adjacent to the other portions to be machined as a result of for example spark discharges, and by usefully processing the signal of the above detected spark-generating position. The art for detecting the spark-generating position in wire cut electrical-discharge machining can be summarized as follows:

In Laid-Open Japanese Patent Application 53-64899, a voltage measuring circuit detects the fluctuation of electrical resistance in between sparking points, feeder members and the workpiece, as against the wire electrode by measuring the voltage between them, to measure or detect the spark generating position. In Laid-Open Japanese Patent Application 59-30621, et al, there is shown that by measuring the current value flowing into the upper and lower or either one of the feeder members, the spark-generating position is detected by the current waveform being a function of inductance at the sparking point. Laid-Open Japanese Patent Application 62-15017, shows that currents flowing to the wire electrode through the upper and lower feeder members are detected by individual current detectors, and a signal corresponding to the difference of currents flowing into both current detectors is delivered through the process of difference amplification to detect the spark-generating position. The present invention disclosed hereinafter is intended to be one in which the spark-generating position can be detected with higher accuracy, or more precise and precision position detection can be done by the detected signal.

According to the present invention there is provided a wire break detection system for a wire cut electrical-discharge machining apparatus, said apparatus including a renewable wire electrode movable in its axial direction through a working zone of said apparatus wherein a workpiece to be machined may be positioned, said wire electrode being held under tension and in contact with upper and lower electrical feed members respectively disposed on opposite sides of said working zone, and wherein, during machining, said workpiece is spaced from the wire electrode in said working zone by a working gap across which machining pulses are impressed in order to produce spark discharges between said wire electrode and said workpiece, said detection system being characterised by; current detectors for detecting the current flowing through one or both of said electrical feed members; a spark position detecting means for amplifying the detected current value from said current detectors and generating signals corresponding to the spark discharge position along the axial direction of the wire electrode; a digital data arithmetic unit for converting the spark discharge position signals from said spark position detecting means into digital data; adjuster means for setting upper and lower limit values of digital data corresponding to the locations of the upper and lower surfaces of a workpiece to be machined; means for comparing the digital data representative of the spark position with said upper and lower limit values; spark position generating means for generating a signal indicative of a spark position, said spark position generating means being responsive to a spark position digital data value greater than said upper limit value or less than lower limit value, to generate a signal indicative of a spark discharge outside of said workpiece thickness; and broken wire discrimination means, responsive to said signals indicative of the spark position being outside the thickness of the workpiece for generating a wire break signal.

In order to increase accuracy in detecting said spark-generating positions when arranging said broken-wire-electrode discriminator, it is preferable to provide the arrangement comprising: upper and lower peak holding circuits detecting the peak-point currents detected by the upper and lower current comparators every time said sparking pulse is created, a difference amplifier as the spark-position detecting means extracting the difference between peak-point currents latched by said both peak holding circuits to give out the signal accommodating to the sparking position, and in order to do after an extra-short time after the termination of the gate signal of said sparking pulse when converting output values from said difference amplifier into digital data as the information about the sparking position each time said sparking pulse occurs, a delay timing circuit for said gate termination signal additionally formed in said digital data arithmetic unit for spark-generating positions.

In addition, it is preferable to arrange so that when said broken-wire-electrode discriminator is arranged to use, the accuracy in detecting said sparking position may not decrease or vary at the time of changing to the predetermined electrical working conditions, and when the spark positional signal obtained through said difference amplification are supplied to said arithmetic unit to convert them into the digital data at the spark-generating position, an amplification degrees of the inversed amplification circuit amplifying said spark positional signal according to the predetermined working conditions related to the magnitude of a sparking pulse width is altered for setting.

In addition, in some embodiments, it is preferable to provide the arrangement that the workpiece thickness inward/outward detector at said sparking position is arranged so as to be able to give out the workpiece thickness inward spark positional signal in the event digital data of the discharge generator delivered from said arithmetic unit are within the digital data values of less than the upper limit and more than the lower limit established by said upper and lower limit adjusters, and said broken-wire-electrode discriminator is formed with a counter entering said thickness inward/outward spark positional signal, said counter is arranged so that said thickness outward spark positional signal are integrally counted, while, the count of the above integrated thickness outward spark positional signal is cleared by the input of said thickness inward spark positional signal, and then the broken-wire-electrode signal is output to the wire cut electrical-discharge machining control device when the integrated count of said thickness outward spark positional signal has reached the predetermined value.

Moreover, the wire cut electrical-discharge machining apparatus with respect to the second device of the present invention comprises: in the foregoing first device, for a device giving out the feeder member wear detecting signal in response to the output detected said workpiece thickness outward spark positional signal output by the workpiece thickness inward/outward detector at its sparking position, or when the detected output variable has reached the predetermined variable of a value fairly smaller than that of the broken-wire-electrode discriminator and devices discriminating the wear of feeder members in response to the wear detecting signal input from said device, said device tuning on the feeder member wear discriminating signal in the event no broken-wire-electrode signal is delivered from said broken-wire-electrode discriminator even if the predetermined time has passed after said wear detecting signal input.

When carrying out the second device formed with a wear detecting device and a wear discriminator for these feeder members, it is preferable to provide the arrangement comprising: a logic circuit tuning on the upper or lower wear detecting signal through thickness outward spark positional signal and said feeder member wear detecting signal output by said workpiece thickness inward/outward detector for said feeder member wear detecting device, and a device giving out the upper and lower wear discriminating signals to the display of the wire cut electrical-discharge machining control device and to the notice means through said wear discriminating signal and said logic circuit signal for the above-stated feeder, member wear discriminator.

Embodiments of the invention will now be described, by way of example only, with reference to the accompanying drawings, in which:
Figure 1 is a block diagram representing the general arrangement of one embodiment in connection with the first device of the present invention;
Figure 2 is an illustration of a connecting circuit for the parts of a power system 7A and a control device 7 for wire spark machining in Figure 1;
Figure 3 is an illustration of a peak holding circuit as an example of a holding circuit of Figure 1;
Figure 4 is an illustration of a connecting circuit for the parts of a difference amplifier as a spark-position detecting means 11 and a digital data arithmetic unit 12 for spark-generating positions in Figure 1;
Figure 5 is an input/output voltage or current waveform and a timing chart for individual parts in circuits in Figures 1 through 4, and A, B, C and D are illustrations representing the case where some differ in width of a gate signal G2 and others in discharging condition;
Figure 6 is a waveform and timing chart when a peak holding circuit is used;
Figure 7 is a time characteristic chart of the distribution of the digital data values PD at spark-generating positions at the time of steady machining;
Figure 8 is a time characteristic chart of the distribution of the digital data values at spark-generating positions at the time of short-circuiting or concentration of spark discharge;
Figure 9 is a block diagram representing the general arrangement and connected relationship of the device carrying out the inward/outward detection whereabouts the digital data of the sparking position detected appertains and discriminating the wire electrode breaking in response to the frequency of detection of thickness outward signals;
Figure 10 is a longitudinal section showing the arrangement of one embodiment of the upper and lower water supply and guide blocks incorporating feeder members;
Figure 11 is a cross section of the part showing the movable arrangement of the upper and lower feeder members and a specific example of the driving mechanism;
Figure 12 is a block diagram showing the general arrangement of an example of the feeder member wear detection specifically concerning the second device of the present invention; and
Figure 13 is a block diagram concerning the wear detection and discrimination of the feeder members.

An embodiment of the invention is described in detail as follows:

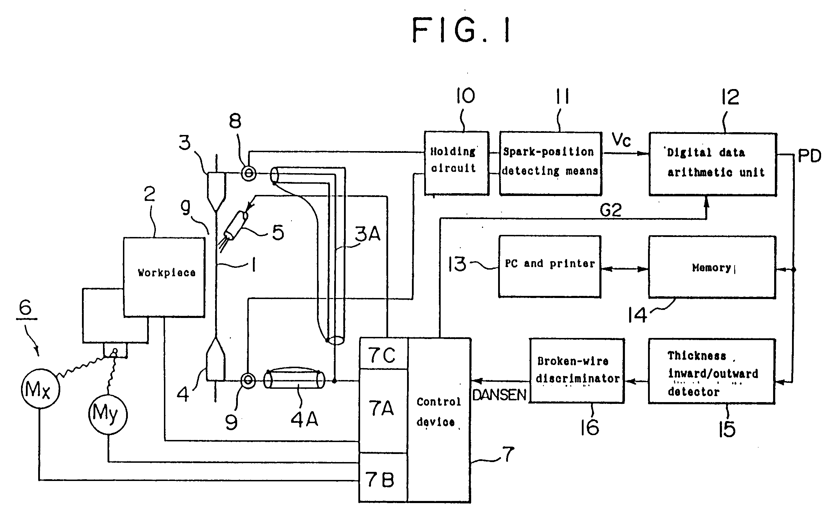

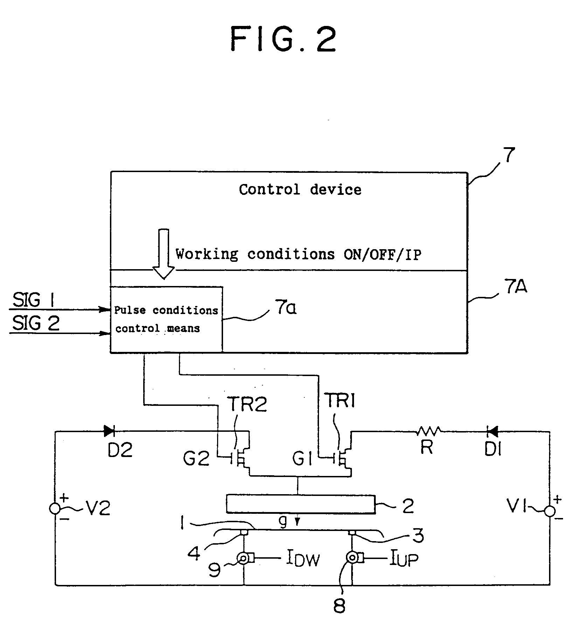

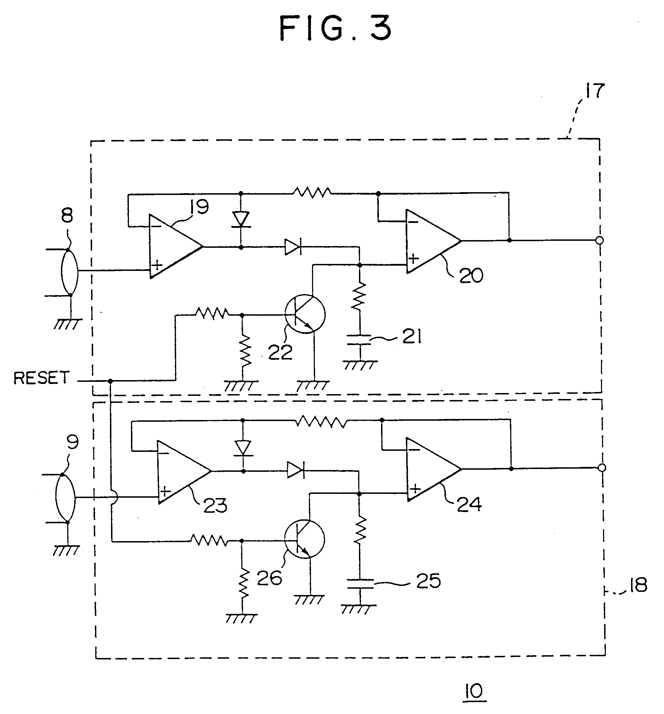

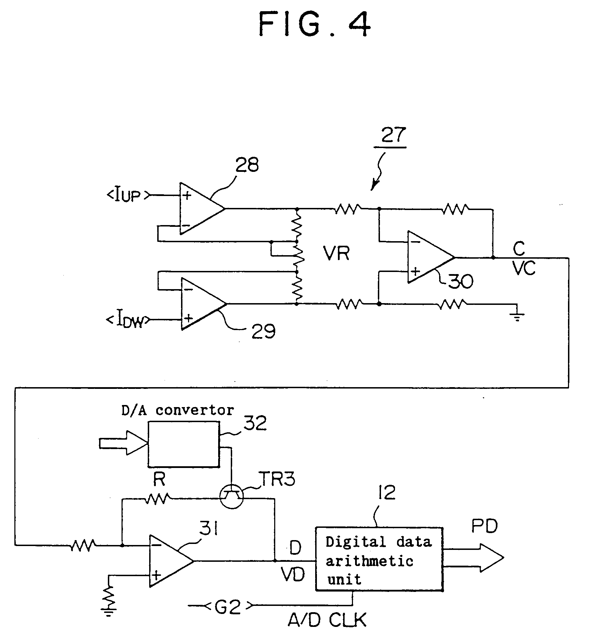

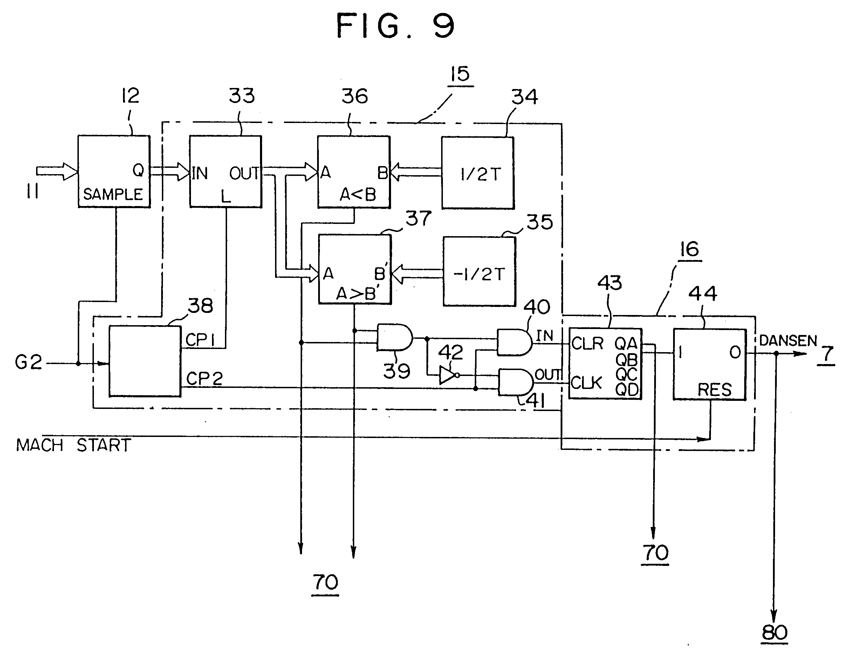

Figure 1 is a block diagram representing an embodiment of the first and second devices of the present invention; wherein 1 is a wire electrode travelling on a renewing feed basis in the axial direction applied at a predetermined tension to the interspace between positioning guides whereby machining is carried out by supporting a workpiece 2 from a direction at almost right angles to the axial direction of said electrode and spaced by a very small gap g. Voltage pulses are applied across the workpiece 2 and the wire electrode 1 from the wire cut electrical-discharge machining power system 7A (Figure 2) through upper and lower interpole lines 3A and 4A and upper and lower feeder members 3 and 4. A working fluid is applied to said gap g by means of a nozzle 5 to generate intermittent sparking pulses, and a relative machining feed is given on the plane in said right-angled direction though a feeding mechanism 6 having axis feed motors Mx and My on the X-Y plane; 7B is a machining feed driving circuit; 7C is a working fluid supply circuit; and 7 is a wire cut electrical-discharge machining control device incorporating an NC unit which for such as the power system 7A and circuits 7B and 7C, carries out settings, changes and controls according to such as the established working conditions, programs, various control signals. 8 and 9 are upper and lower current comparators detecting shunt discharge currents supplying through the feeder members 3 and 4 to a wire electrode 2 on the output parts of the upper and lower interpole lines 3A and 4A when said sparking pulses are generated; 10 is a pair of holding circuits arranged as required so that detected signals of the detectors 8 and 9 are entered. These will usually use sample-and-hold circuits so that, for example, the detected signals are latched by synchronizing to the termination of spark-pulse gate signals. The most desirable mode of said holding circuits of the invention is that peak holding circuits (Figure 3) are formed to latch the voltages corresponding to the peak point of the detected current signals. 11 is a spark-position detecting means amplifying the output signals from said current detectors 8 and 9, or the output of holding voltage furnished as required as above, and giving out spark position signals VC representative of the sparking position in the axial direction of the wire electrode between said pair of feeder members 3 and 4. If a pair of upper and lower current detectors 8 and 9 are formed as the more desirable mode of carrying out the above-stated invention, there is preferably provided a difference amplifier (Figure 4) differentially amplifying both detected signals or holding signals. 12 is a digital data arithmetic unit (Figure 4) for converting the spark positional signal amplified by said spark-position detecting means 11, into digital data, eg, eight-bit digital data, as information which can be output. 14 is a memory storing the digital data PD of the spark-generating positions output by said arithmetic unit 12; 13 is a PC with printer carrying out the required operation and processing for the digital data stored in said memory 14 in response to the operator control and adapted to produce a hard copy; 15 is a workpiece thickness inward/outward detector (Figure 9) for checking whether said spark-generating position is within a thickness of the workpiece 2 while in machining or not; that is, as to whether discharging occurs across the workpiece or not, according to the digital data PD from said arithmetic unit; 16 is a broken-wire discriminator (Figure 9) giving out a broken-wire-electrode signal (DANSEN) whereby said wire cut electrical-discharge machine stops at least its machining motion in the event of a state beyond the required level in frequency of occurrence. This occurs if, for example, said workpiece thickness outward spark positional signal detected and delivered by said thickness inward/outward detector 15 exceeds the predetermined amount; control device 7 receives the broken-wire-electrode signal (DANSEN) from said discriminator 16, stops supplying working voltage pulses at least near the machining power system 7A to stop machining, or further at least stops or clamps stringing the wire electrode and the running or moving of the wire electrode in the travelling system, and preferably stoppably controls the circuits 7B and 7C for machining feed and working fluid, or additionally activation of said control device 7.
Figure 2 shows an example of a double pulse supply system of high voltage small current and low voltage large current as an example of the wire cut electrical-discharge machining power system 7A, wherein V1 is an auxiliary supply of high voltage small current, for example, of 300 volts or thereabout; V2 is a main supply for machining of low voltage large current, for example, of 100 volts or thereabouts, as against said auxiliary supply; D1 and D2 are reverse-current protection and securing diodes respectively; R is a current limiting resistance; TR1 and TR2 are on-off switching elements for said auxiliary supply V1 and main supply for machining V2; G1 and G2 are input gate signals with respect to said switching elements TR1 and TR2, which enter between the gate source terminals of said switching elements TR1 and TR2 consisting of, for example, MOS-field-effect transistors from a setting and control means 7a for pulse conditions in the machining power system 7A which is set and controlled by the wire spark machining control device 7 including said NC; then, supplies a voltage or spark pulse with desired polarity, voltage or sparking duration, quiescent time, and amplitude value of current between the wire electrode and the workpiece 2.
Figure 3 shows an example of the peak holding circuit of the preferred mode of the sample-and-hold circuit for detected signals arranged when required between said current detectors 8 and 9 and the spark-position detecting means 11 amplifying the detected current signals to deliver the spark positional signal. The embodiment comprises upper and lower peak holding circuits 17 and 18 for each of current detectors 8 and 9 depending on the current detection on the upper and lower sides. The peak holding circuits 17 and 18 each comprise holding capacitors 21 and 25, two operational amplifiers 19/20 and 23/24 each, and reset transistors 22 and 26 wherein reset signals emitting holding charges to reset the circuits are input.

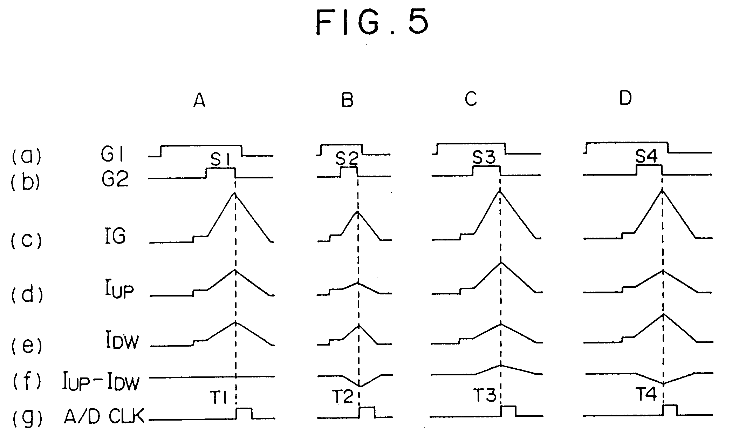

Figure 4 is a circuit diagram of an embodiment of the spark position detecting means 11 which, when holding circuits amplifying the current signals detected by said current detectors 8 and 9 or latching the above detected current signals are arranged, amplifies those holding signals to deliver the spark positional signal and shows a block diagram of the part of the digital data arithmetic unit 12 for said spark-generating position. As an embodiment of said detecting means 11, it shows an example using the difference amplifier 27 as the amplifier in a case where detecting currents was carried out at the parts of both upper and lower feeder members, being a preferred mode of carrying into practice. In said difference amplifier 27, 28 and 29 are operational amplifiers to which said upper and lower detected current signals Iup and Idw are input. Their outputs are amplified by an operational amplifier 30 after regulating the difference between the detected current signals (Iup - Idw) [see Figure 5 (f)], for example, so that said difference (Iup - Idw) is all but zero when a spark discharge took place at the position on a half of the wire electrode 1: just middle between the upper and lower feeder members 3 and 4, against the workpiece 2 and thereby a spark positional signal VC is delivered, and said spark positional signal VC is entered into said arithmetic unit 12 to carry out A/D conversion and operation. The analog signal on the sparking position corresponding to the difference between the above detected current signals is then given out by converting, eg, into eight-bit digital data PD. Then, in this embodiment, said spark positional signal VC is arranged so that a signal VD regulated according to the working conditions enters into the arithmetic unit 12 through an amplifier circuit, the amplification factor of which varies inversely as the machining voltage or sparking pulse width (time) of working conditions. The amplifier circuit consists of an operational amplifier 31 for inverted amplification of said signal VC, a transistor TR3 inserted in a feedback circuit of said amplifier 31 to convert and regulate the amplification factor, and an A/D convertor 32 whereby signals are supplied to the transistor TR3 so that the amplification factor is in inverse proportion to the voltage or sparking pulse width of predetermined working conditions; that is, said gate signals are measured by counting to give out analog signals. The amplifier circuit is arranged in this manner so that with this type of wire cut electrical-discharge machining, the amplitude of the current that the electrical working conditions may appear as a setting or phenomenon with respect to the voltage or sparking pulse width, and time to be set or desired is very excessive, with the result that the waveform of the sparking current will be triangular wave-like, as a rule, whereupon the sparking current will not rise up to the predetermined value or more under the voltage or sparking pulse width of usually set working conditions, and therefore, by only differentially amplifying the difference between the above detected current signals (Iup - Idw), as described with reference to Figure 5, it is optionally impossible to make a distinction of detected sparking positions for different said voltage or sparking pulse width settings.

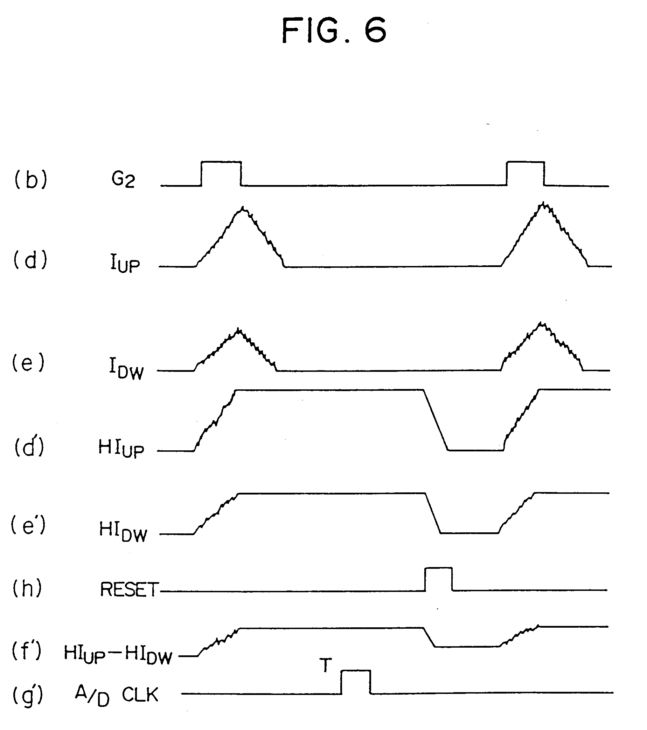

Figure 5 and Figure 6 are figures showing such as input/output voltages, current waveforms and their timing for individual parts in block diagrams and circuits in said Figures 1 to 4. Figure 5 shows waveforms of holding circuit 10, while, Figure 6 shows waveforms of holding circuit 17 and 18 in Figure 3, arranged as the holding circuit 10. In Figure 5; A, B, C and D show the case where the voltage or sparking pulse gate signal (b) G2 is the same pulse width for A, C and D (S1 = S3 = S4), wherein A is the case when the difference (f) (Iup - Idw) = 0, C is in the case of a certain value plussed the difference, and D is minus the difference, whereas B is the case when said gate signal (b) G2 is less than S1 (= S3 = S4) : the width of the pulse is narrow, and conditions are set for higher precision machining.

In Figure 5, G1 of (a) shows the gate signal of said switching element TR1, G2 of (b) shows the gate signal of the same element TR2, IG of (c) shows the waveform of the sparking current (Iup + Idw), Iup of (d) shows the upper detected current signal flowed from the sparking point to the workpiece 2 through the wire electrode 1 from the upper feeder member 3 that is detected by the upper current detector 8, Idw of (e) shows the lower detected current signal as well, Iup - Idw of (f) shows the difference between said upper and lower detected signals, and A/D(CLK) of (g) shows the timing pulse generated by synchronizing the termination and turning off of the gate signal G2, besides allows the digital data arithmetic unit 12 of said spark-generating position to occur arithmetic operation to convert said input signal VD into digital data.

A, C and D show the case when the same value was set for the voltage or sparking pulse, the spark of A is taken to be a spark discharge fired at the part of the just midpoint between the feeder members 3 and 4 (in reality the possibility of being a slightly upper or lower spark as against the midpoint is acute, for it is regulated by the variable resistance VR of said difference amplifier 27), the sparks of C and D are upper and lower spark discharges as against the midpoint respectively; their sparking positions can be checked by monitoring the digital data PD converted and computed by the arithmetic unit 12.

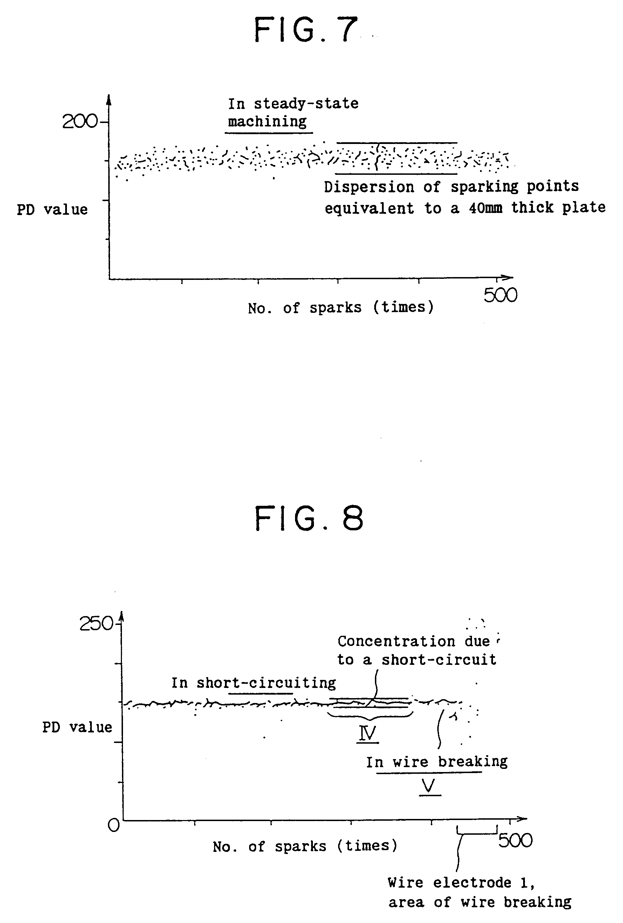

Figure 7 and Figure 8 are characteristic charts of digital data PD of spark-generating positions operationally output in succession every time a sparking pulse is created as above described, or based on the sparking pulse sampled when required as a pulse of every three pulses when a 40mm thick workpiece 2 was machined. Figure 7 shows steady-state machining and Figure 8 shows machining under unsteady-state conditions, as short-circuiting, concentrated sparking and wire breaking, plotted on the graph chart. The figures show graduated digital data values (A/D converted spark-generating positional signals PD) from said arithmetic unit 12 vertically and number of sparks (= time) horizontally. In steady machining (Figure 7) involving almost no concentration of sparks, the passage of machining time is such that plotted points of sparking positions are random and almost evenly scatteredly distributed over the whole thickness of the workpiece 2 in the axial direction of the wire electrode 1. In the case of short-circuit as just before breaking of the wire electrode 1 and spark concentration (Figure 8), most plotted points of sparking positions are concentrated at the location of a short-circuit point along the plate thickness (40mm) of the workpiece 2, a partial scattering to the perimeter is found, and yet plotted points are in linearly intermittent relation along the time base. Suppose this relation continues, V wherein the wire electrode breaks will result, advancing a concentrated linearization of plotted points as a part IV; and when the wire electrode 1 has broken, both its ends will come in contact with the workpiece 2 and others, and strike sparks as a result of their gambols; and the positions of sparking points will then strike out in the axial direction of the wire electrode 1 beyond the plate thickness of the workpiece 2. According to the invention, by providing an arrangement so that the spark-generating positions can be detected and distinguished with higher accuracy, apparatus having the ability for accurately, reliably and quickly detecting the break of the wire electrode 1 can be arranged.

Figure 6 is a waveform chart of each part when as the holding circuit 10 for detected current signals, the peak holding circuit (Figure 3) was arranged between the current detectors 8 and 9 and the spark-position detecting means 11, wherein HIup of (d') is a peak holding wave-shape of upper detected currents, HIdw of (e') is a lower peak holding wave-shape as well, and, the signal equivalent to the peak value of detected current signals is latched until the RESET signal of (h) is delivered, their difference: HIup - HIdw of (f') is differentially amplified, and a time setting pulse T of (g') fairly delayed as against the back-up time of gate G2 as shown in Figure 5 is delivered at the time of amplifying the peak holding difference to allow the digital data arithmetic unit 12 to carry out conversion into the digital data PD. As described above, when the voltage or sparking pulse under the predetermined working conditions is relatively wide as against in particular the amplitude of the sparking current, and an amplitude of sparking currents IG of (c) rises to the predetermined maximum value by the termination of the pulse width, of course, there is no need to allow said time setting pulse T to delay.

Spark positional signal VC in Figure 4 is regulated by the variable gain inversion amplifier consisting of the operational amplifier 31 and others, for example, as compared the spark B of a short gate signal and the longer spark D, the difference of both detected current signals are equal: $\text{B(Iup - Idw) = D(Iup - Idw)}$ 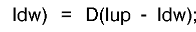 ; with the signal VC only amplified by the difference amplifier 27 of the spark-position detecting means, when it is converted into the digital data PD by the arithmetic unit 12, the possibility of taking them to be sparks in the same position is high. However, in response to the upper detected current signal (d) and lower detected current signal (e) of individual sparks, the ratio of upper to lower is 1:2 for spark B and 2:3 for spark D; then, they are recognized as sparks in different positions; approximately 67% and 60% plate thickness of the workpiece 2 from the bottom, respectively. Thus, an arrangement is provided so that as described above, the internal resistance of the transistor TR3 is controlled to obtain the amplified and regulated signal VD, to convert into digital data of sparking positions.

There follows, with reference to Figure 9, a description of the workpiece thickness inward/outward detector 15 that detects the sparking position of each sparking pulse or sampled sparking pulse, and, based on the data PD converted into digital data, detects whether the generated position of said spark is in a position within the thickness of the workpiece 2 or not ie whether the spark is beyond the plate thickness or not, and of the broken-wire detecting means 16 that gives out the broken-wire-electrode signal (DANSEN) to stop the wire cut electrical-discharge machine's action functions or at least machining action, when the wire electrode is taken to be in a broken condition, when the detected signal for the spark-generating position through that detector 15 is partial to the workpiece thickness outward signals in some extent or more; that is, when the frequency of occurrence of workpiece thickness outward spark positional signals is more than the predetermined value with respect to the thickness inward spark positional signals, or occurred excessively beyond the average.

Said workpiece thickness inward/outward detector 15 comprises: a latching circuit 33 to which is applied digital data from said arithmetic unit 12; adjusters 34 and 35 presetting the upper half thickness +1/2T and lower half thickness -1/2T from a central portion of usually upper and lower halves of a plate thickness T of the workpiece 2 as the digital data value for each and as the upper and lower limiting values for the spark-generating position; spark-position digital data (A) of the updated sparking pulse delivered from said latching circuit 33; first and second upper and lower limit comparators 36 and 37 comparing (A) with the thickness digital data values (B) and (B') of the upper and lower limiting values from the usual central position of the thickness of the workpiece 2 set by said comparators 34 and 35; a delayed timing pulse generator 38 synchronizing the closing of said gate signal, turning on said timing pulse T and the like, to give out a timing pulse CP1 of latching command to the latching circuit 33, slightly delaying the output of said timing pulse CP1 to deliver a delayed timing pulse CP2, and outputting the thickness outward detecting signal corresponding to the sparking position of the updated generated sparking pulse, within or beyond the workpiece thickness; and a logic circuit which receives the signal output of the compared result from said two comparators 36 and 37, makes a logical measurement according to the occurrence of the above delayed timing pulse CP2, delivers a thickness inward detected signal IN if the above generated position is within upper and lower limit thickness of the thickness of the workpiece 2 being currently machined, and, if out of the thickness, delivers a thickness outward detected signal OUT, and incorporates three AND-circuits 39, 40 and 41 and one invertor circuit 12. Said broken-wire-electrode discriminator 16 is a counter 44 arranged so that when said thickness outward detected signal OUT is delivered, it integrally counts, entering into a count terminal CLK, and when the thickness inward detected signal is delivered, it resets said integrated count, entering into a reset terminal CLR, having four output terminals Q(A-D). In this embodiment, it incorporates an output terminal QA giving out a wear-check starting signal to a feeder member wear detector 70 described below in response to one input of thickness outward detected signal OUT from said AND-circuit 41, and an output terminal QB giving out a signal when the predetermined value of continuously more than two, eg 10 counts, is counted for the input of said thickness outward detected signal OUT, and sets a flip-flop 44 to output the broken-wire-electrode signal (DANSEN) to the wire spark machining control device 7; then, stops machining action on delivering of a signal from said output terminal QB. It is to be noted that said broken-wire-electrode signal (DANSEN) is delivered to a feeder member wear discriminator 80 described below as the signal to halt or quit said wear discriminating due to a wire break or at least a perceived wire break, and the output signal of the compared result from said comparators 36 and 37 is delivered to a feeder member wear detector 70 described below as is the output terminal QA of said counter 43 as a signal to distinguish which feeder member is worn (upper and lower). Said flip-flop 44 incorporates a reset terminal RES for carrying out, eg, the correction and regulation of the required working conditions and the like to resume machining after the recovery of the wire electrode by manually or automatically inserting through the joint, after the output of said broken-wire-electrode signal (DANSEN), and is arranged so that a machining restart signal MACH START can be entered into said terminal.

It is to be noted that hereinbefore a description was given by using expressions, eg: digital data value A of spark-generating positions delivered from the arithmetic unit 12; then, latched by the latching circuit, digital data values B and B' preset in response to the upper half thickness +1/2T and lower half thickness -1/2T of the workpiece. However, such values exclude cases where the machining condition is not particularly abnormal, for example, the power dispatching state slidingly contacted from the upper and lower feeder members 3 and 4 to the wire electrode 1 is specially abnormal. In an extreme case, for example where the divertedly shared ratio of power dispatching sparking currents from the upper and lower feeder members to the wire electrode 1 is 1:0, and in the case of an uneven power dispatching state of more than 5:1, it is detected as the spark-position digital data A beyond workpiece thickness on the upper or lower feeder member caused its unevenly concentrated supply, said data A are compared with the predetermined data B and B'. The thickness detected signal OUT is delivered. Now, in machining when normal working conditions have been correctly selected, set and regulated, it is usually carried out satisfactorily and advances. The values of digital data PD delivered from the digital data arithmetic unit 12 for spark-generating positions while machining every time a sparking pulse is created, are entered into each A of the comparators 36 and 37 to be compared with upper and lower limiting values B and B' of each data value equivalent to the upper and lower thicknesses from the centre of a thickness of the workpiece 2. However, usually up to an upper limiting value (A<B) and over a lower limiting value (A>B') for said A, comparators 36 and 37 comply individual predetermined conditions. They give out signals to the AND-circuit 39. A signal is delivered from the AND-circuit 40 to the terminal CLR of the counter 43 by the joint with the delayed timing pulse CP2 delivered from the pulse generator circuit 38 after a slight delay from latching of said relative data A, and if the count of signal inputs to the terminal CLK side is integral, it is taken to be zero by resetting, and if it does not exist, no signal is delivered from said counter 43, as counted zero. For almost all the sparking pulses produced in succession or predeterminately sampled sparking pulses in a normal wire cut electrical-discharge machining process, the detection and discrimination are repeated one after another as described above, and the workpiece thickness inward/outward detector 15 gives out the thickness inward detected signal IN only, so that the broken-wire-electrode detector 16 gives out almost entirely no signal; machining is carried out while maintaining the condition of Figure 7.

In some instances, for example, where machining is extended over a long time, a problem may occur in some control system or a change in conditions may occur. Figure 8 shows one example of time (abscissa) against digital data PD under considerably unusual conditions where concentrated sparks and short-circuits occur in the machining gap at random. The length of the axis of abscissa (time) represents a time of about 5ms or thereabouts. From the digital data PD the machining gap seems to be already in a serious condition, frequently involving the foregoing concentration of sparks and occurrence of short-circuits and there is a likelihood of a break to the wire electrode.

If such an unsteady state is detected frequently causing a spark concentration and short-circuiting as shown above in Figure 8, or a precursor condition likely to proceed to such an unsteady-state machining condition, is detected by assorted detecting means, circuits, etc then several working conditions may be controlled. For example, the mean working current may be varied to half or less (also including to temporarily zero) through the so-called OFF delay between voltage pulses, the machining feed may be controlled by reducing and stopping the feed rate or backward feeding, or the working fluid supply can be varied, particularly jetting conditions, to return the machining condition to normal, dissolving the spark concentration and short-circuiting, and preventing the occurrence of wire electrode breaking accidents.

A breaking accident to the wire electrode seldom occurs. However, if this should occur, it is necessary for the quickest possible detection to provide means for stopping the machine. According to the invention, the spark-generating position of a sparking pulse generated by impressing across the wire electrode 1 and the workpiece 2 from a pair of feeder members 3 and 4 is detected accurately. It is converted into digital data PD = A by the arithmetic unit 12 for input into the workpiece thickness inward/outward detector 15 for sparking positions and compared with the digital data B of upper limiting value on the upper side of the thickness set in the comparator 36 of said detector 15 and the digital data B' of lower limiting value on the lower side set in comparator 37, to logically discriminate as to whether the spark-generating position of said sparking pulse appertains to the inward area IN of the workpiece thickness complying with the condition: B>A>B', or to the outward area OUT condition: A>B and/or A<B', to be able to give out a signal, and if said detector 15 gives out the thickness outward signal OUT, said signal OUT is counted by the counter 43 of the broken-wire-electrode discriminator 16, the thickness outward signal OUT count of said counter 43 is integrally counted until the thickness inward signal IN is delivered from the detector 15, integrally counting the predetermined number of counts, eg, 10, gives out a signal, the flip-flop 44 is set to supply the broken-wire-electrode signal (DANSEN) to the wire spark machining control device 7, and a control action functions to: at least stop or clamp the wire electrode travel and movement, or machining stop or at least abeyance for machining to the machining power system 74, machining feed driving circuit 7B, working fluid supplying circuit 7C and the like, are made active. With this embodiment, the shortest time until the broken-wire-electrode signal (DANSEN) is delivered to initiate the control action after the output of the first thickness outward signal OUT, is shorter than about 100»s. Even for detecting the wire breakage by the sparking position detection, controlling and the like eg, after such as the pause (OFF 10 times delay) control between voltage pulses, it can be taken to be a short time, eg, within about 1ms or thereabouts at longest. It is therefore possible to give out said broken-wire-electrode signal at a relatively early stage where the digital data PD of sparking positions mentioned as the broken-wire area of the wire electrode in Figure 8 have entered in the area V, vertically scattered at random beyond the thickness.

Attention is now directed to consideration of the detected data of sparking positions at the time of the break of the wire electrode or thereabouts. When a break to the wire electrode is involved, its end segments gambol and may contact the workpiece 2 and adjacent parts of the portion to be machined, and also other parts - such as the inside of the water-supply and guide blocks which usually have a water supply block retaining a nozzle whereby the wire electrode is coaxially inserted and a working fluid is jetted and a guide block retaining a guide member for positioning the wire electrode, arranged in a single unit - and the like. Sparks are caused, while the portion to be machined, ie, the wire electrode between a pair of upper and lower water-supply and guide blocks are being slack with those, and also the interspace between the wire electrode and each feed member contacts and breaks at random from a steadyingly, slidingly contracted running condition before its break. Therefore, the sparking position at the position beyond the workpiece thickness may be optionally an opposingly contacted or associated portion of the wire electrode with respect to the feeder member and its positional data. However, when the upper or lower feeder member 3 or 4 becomes deformed through wear over time, then most of the sparking currents of the sparking pulses generated at the portion to be machined flow into the wire electrode through the feeder member which is not wearingly deformed, digital data of sparking thereat are detected and discriminated as the position beyond the workpiece thickness, and this is a matter having the connection to the principles of the invention permitting the wear detection on involving a wear to the feeder members, which is disclosed hereinbelow.

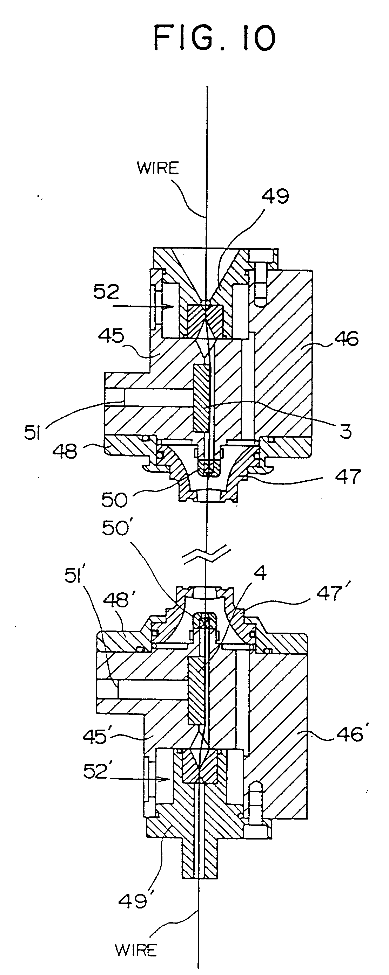

Figure 10 is a longitudinal section showing one example of the upper and lower water-supply and guide blocks attached to said upper and lower arms or to the work head, wherein 45 and 45' are upper and lower guide blocks having an inserting through hole in the travelling-axis part of the machining portion of the wire electrode, 46 and 46' are upper and lower water-supply blocks combinedly defining a passageway with said guide blocks 45 and 45' for working fluid in a single unit, 47 and 47' are upper and lower nozzles, 48 and 48' are upper and lower nozzle holders, 49 and 49' are leading-in and leading-out members having a water-cut guide through which the wire electrode is inserted and forming inlet and outlet passages for the wire electrode 50 and 50' are die-shaped upper and lower positioning guide members arranged at the end parts of the insertion through holes in the upper and lower guide blocks 45 and 45', 3 and 4 are upper and lower feeder members arranged so as to face said insertion through holes, 51 and 51' regulate the projecting condition of said feeder members with respect to said insertion through holes in said feeder members 3 and 4, and the one terminal of the power system 7A for wire spark machining: upper and lower current carrying members jointly used as the brushes which are usually connected to the minus terminals, and 52 and 52' are working fluid inlet ports to the upper and lower water supply and guide blocks. Said feeder members 3 and 4 are formed from a very hard and wear-resisting material with good conductivity such as powder particles of tungsten carbide pressurized, compacted and sintered using cobalt and the like as a binder. They may be of various shapes, for example, of so-called pin-shaped members of round bar and the like and plate or block-shaped members which may be triangular, square or the like. However, in this embodiment, the arrangement is such that the members formed in all but semicylinder were disposed by inserting in such a manner that in Figure 10, their top part sides are oriented toward the insertion through hole side and intersect the space at right angles, and the position in the right-angled direction can be adjusted so that the slidingly contacting length with the wire electrode 1 can be made greater, and also the contacted portion with the wire electrode 1 can be changed by varyingly regulating the feeder members 3 and 4 on their wearing and the like.

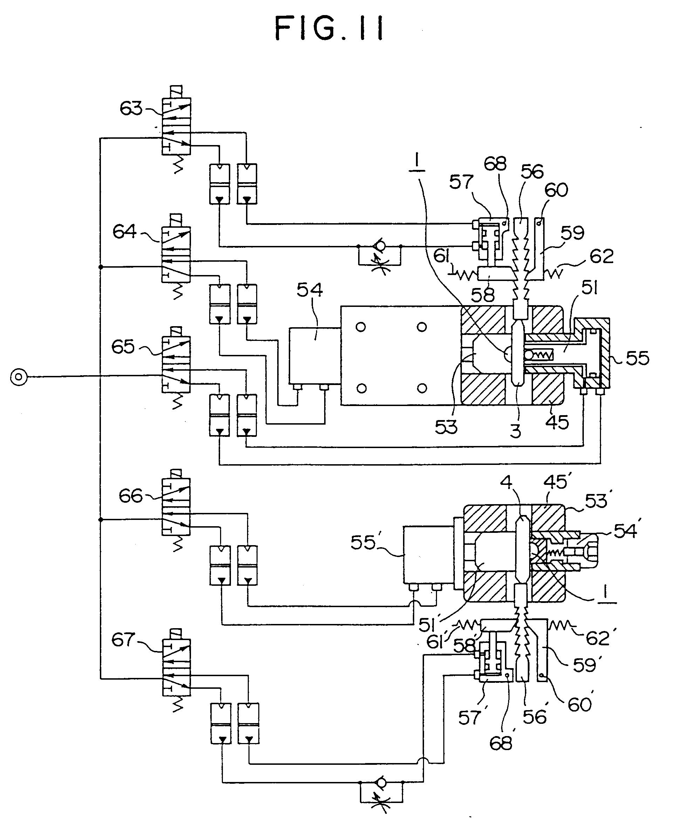

Figure 11 shows an example of the structures of the parts placed in the block compartments 45 and 45' of said upper and lower feeder members 3 and 4, and represents the portion perpendicular to the wire electrode 1 as a cross-sectional view. In this figure, 53 and 53' are pressure members for positioning and receiving the feeder members 3 and 4. The upper member 53 has a cylinder 54 driven system, while, the lower pressure member 53' has a screw and spring driving mechanism 54', locating the receiving positions for the feeder members 3 and 4. On automatically inserting to tie the wire electrode 1, the pressure member 53 is automatically controlled to be actuated backward by the cylinder 54. 55 and 55' are energizing on-off cylinders. The feeder members 3 and 4 are drivingly regulated as cylinders by energizing members 51 and 51' to maintain the required slidingly contacted contacting condition with the wire electrode 1. 56 and 56' are feed actuating bars disposed in a manner as to be opposingly contacted so that upper and lower feeder members 3 and 4 can be driven in the axial direction of the wire electrode 1 and in the right-angled direction. Ratchet gear teeth are used for step feeding in the axial direction and are formed at the predetermined pitch, and feeding pawls 58 and 58' actuated by feeding cylinders 57 and 57' and backward stopper pawls 59 and 59' are engaged. Also in this figure, 68/68' and 60/60' are swinging fulcrums for feeding cylinder 57 and 57' and backward stopper pawls 59 and 59' respectively, and 61/61' and 62/62' are pressure springs for each. In addition, 63, 64, 65, 66 and 67 are directional control valves for said cylinders 57, 54, 55, 55' and 57'.

In the case where the contacted portion of the wire electrode 1 was concluded to be movingly changed to a part having a new surface in response to wear detection of the upper and lower feeder members 3 and 4, activating signals are entered into valves 63 and 67 of a feeder member driver 7D from the wire spark machining control device 7, the valves 63 and 67 are switched inversely as against the illustrated condition to actuate cylinders 57 and 57', and then, as an example, when pawls 58 and 58' are sent off, the backward stopper pawls 59 and 59' rotatively move around the fulcrums 60 and 60' and at the point where they climb over the crests of the ratchet, go to its troughs due to springs 62 and 62'. Then, while the feeding pulse 58 and 58', allowing the cylinders 57 and 57' to rotatively move around the fulcrums 68 and 68' by switching the valves 63 and 67, move backward by a ratchet tooth to go into the next troughs, and can then get ready for the next feeding drive of the actuating bars 56 and 56'. The diameter of the wire electrode 1 used for wire spark machining is about 0.2mm or thereabouts, and scratches and the like on the feeder members 3 and 4, damaged and worn by sliding contact with respect to said wire electrode can be accepted by moving the feeder members 3 and 4 about 1mm or thereabouts each time to renew the slidingly contacted surface portion. The arrangement in above Figure 11 permits wearing of the feeder member to be accommodated several times.

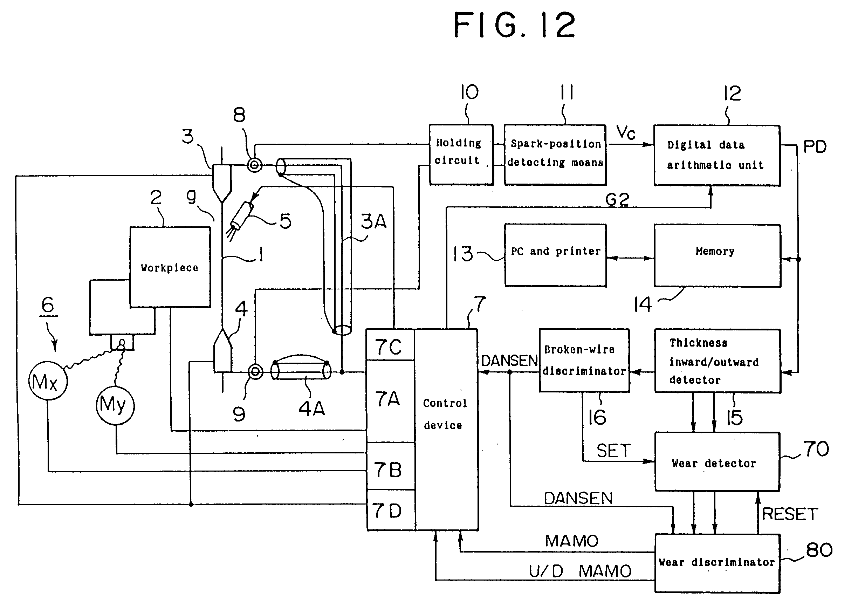

Figure 12 is a block diagram showing a general arrangement of an embodiment of a second device of this invention. This arrangement further carries out the detection and discrimination for a wire electrode breaking and for the existence of a cause; namely, whether this is attributed to wear of the feeder member or not, in the event the said workpiece thickness inward/outward detector 15 for spark-generating positions produced a sparking pulse discriminated as the position beyond the thickness.

This will be disclosed with reference to the embodiment of the first device in Figure 1. When the first thickness outward detected signal OUT after a thickness inward detected signal IN was delivered from the part of second device, ie, said workpiece thickness inward/outward detector 15 for spark-generating positions, with the feeder member wear detector 70 wherein the output from the output terminal QA of the counter 43 of the broken-wire-electrode discriminator 16, the output signal of the compared result from the upper and lower limit comparators 36 and 37 for sparking positions of said thickness inward/outward detector 15 are entered, and as well as a wear detected signal MA and upper and lower wear discriminating signal U/D MAMO delivered by said wear detector 70, the feeder wear discriminating signal MAMO and also the upper and lower discriminating signal are given out in the event said broken-wire-electrode discriminator 16 does not output the broken-wire-electrode discriminating signal DANSEN, even if a predetermined period of time has passed after the output of said thickness outward detected signal OUT, and then these discriminating signals are entered into the wire spark machining control device 7 to display, inform, and if further necessary, to output signals to the feeder member driver 7D to move the feeder members 3 and 4 by a very small distance so that the slidingly contacted portions of said feeder members 3 and 4 with the wire electrode 1 are renewed.

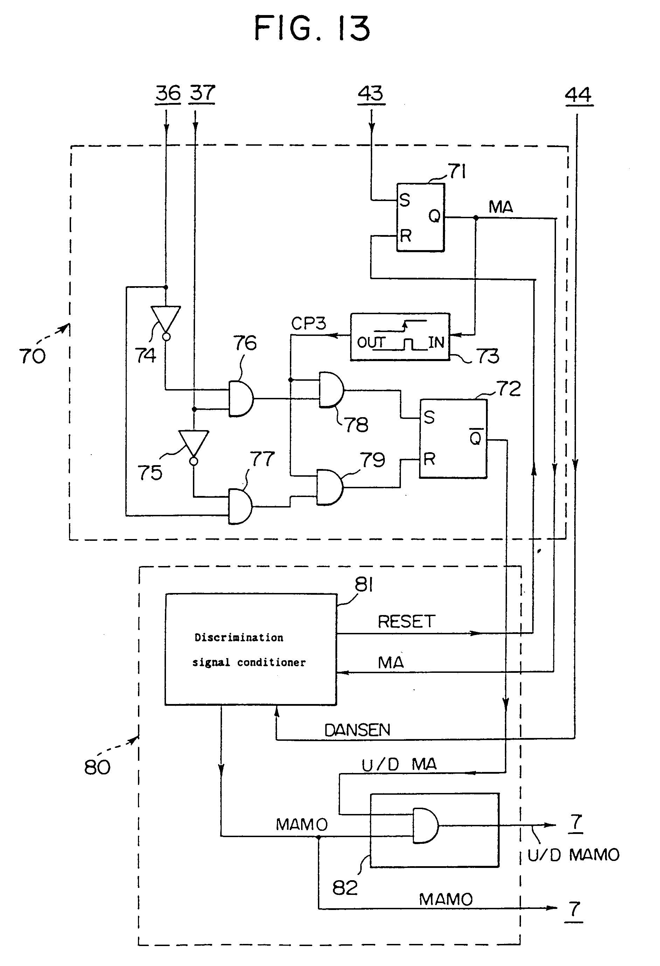

Figure 13 is a block diagram of an embodiment representing details of parts of said feeder member wear detector 70 and wear discriminator 80. The wear detector 70 consists of two RS flip-flop circuits 71 and 72, one-shot pulse circuit 73, two invertor circuits 74 and 75 and four AND-circuits 76, 77, 78 and 79, while, the wear discriminator 80 consists of a signal conditioner 81 for feeder member wear discrimination and an upper and lower wear discriminator 82.

The wear detection of feeder members 3 and 4 is carried out when said thickness inward/outward detector 15 measures the digital data A on detected sparking positions of generated sparking pulses as over the data B on the upper limiting position of the set thickness through the first comparator 36, or as below the data B' on the lower limiting position of the thickness set in the second comparator 37. A signal is delivered from either one of said first and second comparators 36 and 37 and a signal is delivered from the other, so that, the AND-circuit 39 gives out no signal, the AND-circuit 41 gives out the thickness outward detected signal OUT for the output of the delay timing pulse CP2 from the pulse generator 38 at this time. Said signal OUT is counted by the counter 43 of the discriminator 16, said counter 43 gives out a signal from its terminal QA, said signal enters into the flip-flop 71 of the wear detector 70, and the wear detected signal MA is delivered from the terminal QA to the signal conditioner 81 of said wear discriminator 80 and to said one-shot pulse generator 73. Said one-shot pulse generator 73 then gives out a one-shot pulse signal CP3 to the AND-circuits 78 and 79 in response to the input tuning on said wear detected signal MA. However, if digital data A on the detected position of the generated pulse at this time are over data B of the upper limiting value of the thickness set in the first comparator 36, it is more than the data B' on the lower limiting position in the second comparator 37, so that, a signal of over the limit is delivered from the AND-circuit 76 at this time, and an upper and lower wear (lower wear), signal is delivered to set the flip-flop 72. When said digital data A is below data B' of the lower limit of the thickness set in the second comparator 37, it will be below the data B of the upper position in the first comparator 36, and then, at this time, the AND-circuit 77 gives out a signal below the limit, giving out the upper and lower wear (upper wear) signal from the AND-circuit 79 along with said pulse signal CP3 to reset the flip-flop 72.

When the broken-wire discriminating signal DANSEN is delivered from the broken-wire-electrode discriminator 16 and then entered after the wear detected signal MA is entered from the flip-flop 71 of said wear detector 70, said signal conditioner 81 for feeder member wear discrimination gives out a reset signal to the RS flip-flop circuit 71 of said wear detector 70 without forming a discriminating signal on wearing and the like of the feeder member because of a wire electrode break, and the action for wear detecting is then stopped and reset. However, in the event said broken-wire discriminating signal DANSEN is not delivered, even if the preset desired period of time (usually, several milliseconds) has passed after the output of said wear detected signal MA from the flip-flop 71, the signal conditioner 81 forms a wear discriminating signal MAMO, measuring that the wear detected signal MA entered in advance was a signal based on the wear detection of either or both of feeder members 3 and 4, and then, gives out said wear discriminating signal MAMO to the wire sparking machining control device 7 and also to said upper and lower wear discriminator 82. In this upper and lower wear discriminator 82, a detecting signal of the upper and lower wear detection by said wear detector 70 has been entered from the RS flip-flop 72 when said wear detected signal MA was detected, and said upper and lower discriminator 82 will deliver the upper and lower wear discriminating signal taken to be wearing of the upper or lower feeder member to the control device in response to said wear discriminating signal MAMO. Then, in response to the input of at least either one of two signals delivered from said feeder member wear discriminator 80, this wire spark machining control device 7 carries out one or both of alarming and displaying, or depending on settings, through the automatic control of operator and the like control operations after checking the display, the feeder member driver 7D is activated to change or renew the slidingly contacted feeding portions to the wire electrode, or for renewing action for said feeder members, for example. After stopping once, the adaptive control, as for gradually returning to normal machining, is carried out by the program and like preset the machining power system and machining action functions.

It is to be noted that for the wear detection and upper and lower wear discrimination for feeder members 3 and 4 described hereinabove, the workpiece thickness outward detected signal OUT is not really contacted energizing or a nearby spark across the broken ends and the like of the wire electrode 1 and parts beyond the portion to be machined at the location far from the workpiece 2 based on its complete break, for example, due to the wearing deformation exceeding a certain limit of the upper feeder member 3, a sliding contact between the upper feeder member 3 and the wire electrode 1 did fail, the sparking current of said sparking pulses was conducted almost only from the lower feeder member 4, and then digital data of the sparking position were progressed as if they have been detected and measured as the position beyond the workpiece thickness lower limit, and in this case, there is measured that wear has been caused to the feeder member and the wear is being involved to the upper feeder member.

According to the wire cut electrical-discharge machining apparatus of the invention, the sparking position of generated sparking pulses in the axial direction of the wire electrode (whether it be on the workpiece thickness inward or outward) is detected, and when the number of sparking pulses generated beyond the thickness or the frequency of occurrence has exceeded a predetermined level, discrimination against wire electrode breaking is carried out. This quick and reliable detection and discrimination of wire electrode breaking allows the prevention of malfunction and damage to the workpiece, working fluid nozzle, and feeder and travelling systems for the wire electrode.

In addition, according to the wire cut electrical-discharge machining apparatus of the invention when said sparking pulses are generated at a position beyond the workpiece thickness, it is detected, and the detection and discrimination of the wear of the feeder member is carried out in the case when no accident has yet been caused by wire electrode breaking. This permits wear detection with reliability, and also detection of which feeder member is wearing, upper or lower, so that it is possible to provide measures against this and improve the machining performance.

## Claims

1. A wire break detection system for a wire cut electrical-discharge machining apparatus, said apparatus including a renewable wire electrode (1) movable in its axial direction through a working zone of said apparatus wherein a workpiece (2) to be machined may be positioned, said wire electrode being held under tension and in contact with upper and lower electrical feed members (3,4) respectively disposed on opposite sides of said working zone, and wherein, during machining, said workpiece is spaced from the wire electrode in said working zone by a working gap (9) across which machining pulses are impressed in order to produce spark discharges between said wire electrode and said workpiece, said detection system being characterised by;
current detectors (8,9) for detecting the current flowing through one or both of said electrical feed members;
a spark position detecting means (11) for amplifying the detected current value from said current detectors and generating signals corresponding to the spark discharge position along the axial direction of the wire electrode;
a digital data arithmetic unit (12) for converting the spark discharge position signals from said spark position detecting means into digital data;
adjuster means (34,35) for setting upper and lower limit values of digital data corresponding to the locations of the upper and lower surfaces of a workpiece to be machined;
means (36,37) for comparing the digital data representative of the spark position with said upper and lower limit values;
spark position generating means (15) for generating a signal indicative of a spark position, said spark position generating means being responsive to a spark position digital data value greater than said upper limit value or less than lower limit value, to generate a signal indicative of a spark discharge outside of said workpiece thickness; and
broken wire discrimination means (16), responsive to said signals indicative of the spark position being outside the thickness of the workpiece for generating a wire break signal.

2. A wire break detection system according to Claim 1, including a peak holding circuit comprising first and second peak holding circuits (17,18) responsive to said upper and lower current detectors, respectively, and wherein the spark position detection means includes a difference amplifier (27) operable for extracting a signal indicative of the difference between the peak current values held by the peak holding circuits to thereby generate a spark position signal.

3. A wire break detection system according to Claim 2, wherein said machining pulses are generated by means of a gate pulse signal, and further comprising means (12) for generating a timing signal slightly delayed in time with respect to the termination of said gate pulse signal, said timing signal being input to said digital data arithmetic unit for timing the conversion of said difference signal into said digital data.

4. A wire break detection system according to Claim 3, further comprising an amplifier means (31) for amplifying said difference signal, said amplifier means having means (TR3) for varying the amplification factor thereof, whereby said spark position signal is amplified in accordance with predetermined working conditions.

5. A wire break detection system according to any of the preceding claims, wherein said spark position generating means is responsive to a spark position digital data value less than said upper limit value and greater than said lower limit value to general a signal indicative of a spark discharge between said workpiece and wire electrode, said broken wire discrimination circuit (16) comprising a counter (44) for counting up the number of said signals indicative of a spark discharge outside the thickness of the workpiece for generating said wire break signal when said count reaches a predetermined value, said counter being operable, in response to a signal indicative of a spark discharge between wire electrode and workpiece, to reset said count to zero.

6. A wire break detection system according to any of the preceding claims, further comprising wear detecting means (70), responsive to the generation of said signal indicative of a spark discharge outside of the workpiece thickness after the generation of said signal indicative of a spark discharge between said wire electrode and said workpiece, to generate a signal indicative of wear of at least one of said upper and lower electrical feed members, and a wear discrimination means (80), responsive to said wear detecting means, to generate a feed member wear signal in response to a wear detection signal if no broken wire signal is generated by said broken wire discrimination means within a predetermined time after generation of said wear detection signal.

7. A wire break detection system according to Claim 6, including comparing means (15,36,37) operable to generate a first signal if said spark position digital data is less than said lower limit value and a second signal if said spark position digital data is greater than upper limit value, and wherein said feed member wear detecting means comprises a logic circuit (76,77,78,79), responsive to said first and second signals for generating an up/down signal indicative of whether the wear signal is a result of wear of said upper electrical feed member, said lower electrical feed member, or both.

8. A wire break detection system according to Claim 7, further comprising a display (7) and wherein said wear discrimination means is operable to drive said display to indicate said feed member wear status and/or which of said upper and/or lower feed members is worn.

9. A wire break detection system according to Claim 8, wherein contact between said upper and lower electrical feed members and said wire electrode is a sliding contact, and further comprising means (7D), responsive to said wear detection signal and/or to said up/down signal for adjusting the position of at least one of said electrical feed members relative to said wire electrode whereby a new site of sliding contact is established between said at least one electrical feed member and said wire electrode.

## Patentansprüche

1. Drahtbruch-Erfassungssystem für eine Draht-Schneide-Funkenerosionsvorrichtung, wobei die genannte Vorrichtung eine ersetzbare Drahtelektrode (1) aufweist, die in ihrer axialen Richtung durch eine Arbeitszone der genannten Vorrichtung beweglich ist, worin ein Werkstück (2), das abtragend bearbeitet werden soll, angeordnet sein kann, wobei die genannte Drahtelektrode unter (mechanischer) Spannung und in Berührung mit einem oberen und unteren elektrischen Einspeiseteil (3, 4) gehalten wird, die jeweils auf den gegenüberliegenden Seiten der genannten Arbeitszone angeordnet sind, und worin das genannte Werkstück während der abtragenden Bearbeitung gegenüber der Drahtelektrode in der Arbeitszone durch einen Arbeitsspalt (9) beabstandet ist, über welchen hinweg Impulse für die abtragende Bearbeitung aufgeprägt werden, um Funkenentladungen zwischen der genannten Drahtelektrode und dem genannten Werkstück zu erzeugen, wobei das genannte Erfassungssystem gekennzeichnet ist durch:
Stromfühler (8, 9) zum Erfassen des Stromes, der durch eines oder beide der genannten elektrischen Einspeiseteile fließt;
Funkenpositions-Erfassungsmittel (11) zum Verstärken des aus den genannten Stromfühlern erfaßten Stromwertes und zum Erzeugen von Signalen, die der Funkenentladungsposition längs der axialen Richtung der Drahtelektrode entsprechen;
eine digitale Daten-Recheneinheit (12) zum Umwandeln der Funkenentladungs-Positionssignale aus den Funkenpositions-Erfassungsmitteln in digitale Daten;
Einstellermittel (34, 35), um einen oberen und unteren Grenzwert digitaler Daten entsprechend den Lagen der oberen und unteren Oberfläche eines abtragend zu bearbeitenden Werkstücks festzusetzen;
Mittel (36, 37) zum Vergleichen der digitalen Daten, die repräsentativ sind für die Funkenposition, mit dem genannten oberen und unteren Grenzwert;
Funkenpositions-Erzeugungsmittel (15) zum Erzeugen eines Signals, das eine Aussage über eine Funkenposition liefert, wobei die genannten Funkenpositions-Erzeugungsmittel auf einen Funkenpositions-Digitaldatenwert ansprechen, der größer ist als der genannte obere Grenzwert oder kleiner als der untere Grenzwert, um ein Signal zu erzeugen, das eine Aussage über eine Funkenentladung außerhalb der genannten Werkstückdicke liefert; und
Diskriminatormittel (16) für einen gebrochenen Draht, die auf die genannten Signale ansprechen, die eine Aussage über eine Funkenposition liefern, die außerhalb der Dicke des Werkstücks liegt, um ein Drahtbruchsignal zu erzeugen.

2. Drahtbruch-Erfassungssystem nach Anspruch 1, mit einer Spitzenwert-Halteschaltung, die eine erste und zweite Spitzenwert-Halteschaltung (17, 18) umfaßt, die auf den genannten oberen bzw. unteren Stromfühler ansprechen, und worin die Funkenpositions-Erfassungsmittel einen Differenzverstärker (27) umfassen, der zum Extrahieren eines Signals betreibbar ist, das eine Aussage über die Differenz zwischen den Strom-Spitzenwerten liefert, die von den Spitzenwert-Halteschaltungen beibehalten werden, um hierdurch ein Funkenpositionssignal zu erzeugen.

3. Drahtbruch-Erfassungssystem nach Anspruch 2, worin die genannten Impulse für die abtragende Bearbeitung mittels eines Gatterimpulssignales erzeugt werden, und ferner mit Mitteln (12) zum Erzeugen eines zeitbedingten Signals, das bezüglich der Beendigung des genannten Gatterimpulssignales zeitlich leicht verzögert ist, wobei das genannte zeitbedingte Signal in die genannte Digitaldaten-Recheneinheit eingegeben wird, um die zeitliche Steuerung der Umwandlung des genannten Differenzsignals in die genannten digitalen Daten zu bewirken.

4. Drahtbruch-Erfassungssystem nach Anspruch 3, ferner mit Verstärkermitteln (31) zum Verstärken des genannten Differenzsignals, wobei die genannten Verstärkermittel Mittel (TR3) zum Verändern ihres Verstärkungsfaktors aufweisen, wodurch das genannte Funkenpositionssignal in Übereinstimmung mit vorbestimmten Arbeitsbedingungen verstärkt wird.

5. Drahtbruch-Erfassungssystem nach irgendeinem der vorangehenden Ansprüche, worin die genannten Funkenpositions-Erzeugungsmittel auf einen digitalen Datenwert für die Funkenposition ansprechen, der kleiner ist als der genannte obere Grenzwert und größer als der genannte untere Grenzwert, um ein Signal zu erzeugen, das eine Aussage über eine Funkenentladung zwischen dem genannten Arbeitsstück und der Drahtelektrode liefert, wobei die genannte Diskriminierungsschaltung (16) für den gebrochenen Draht einen Zähler (44) aufweist, um die Anzahl der genannten Signale abzuzählen, die eine Aussage über eine Funkenentladung außerhalb der Dicke des Werkstücks liefern, um das genannte Drahtbruchsignal dann zu erzeugen, wenn die genannte Zählung einen vorbestimmten Wert erreicht, wobei der genannte Zähler in Abhängigkeit von einem Signal betreibbar ist, das eine Aussage über eine Funkenentladung zwischen der Drahtelektrode und dem Werkstück liefert, um die genannte Zählung auf Null zurückzustellen.

6. Drahtbruch-Erfassungssystem nach irgendeinem der vorangehenden Ansprüche, ferner mit Abnutzungserfassungsmitteln (70), die auf die Erzeugung des genannten Signals ansprechen, das eine Aussage über eine Funkenentladung außerhalb der Werkstückdicke liefert, nach Erzeugung des genannten Signals, das eine Funkenentladung zwischen der genannten Drahtelektrode und dem genannten Werkstück angibt, um ein Signal zu erzeugen, das eine Aussage über die Abnutzung mindestens eines des oberen und unteren, elektrischen Einspeiseteiles liefert, und Abnutzungs-Diskriminierungsmitteln (80), die auf die genannten Abnutzungs-Erfassungsmittel ansprechen, um ein Einspeiseteil-Abnutzungssignal in Abhängigkeit von einem Abnutzungs-Erfassungssignal zu erzeugen, wenn kein Drahtbruchsignal von den genannten Drahtbruch-Diskriminierungsmitteln innerhalb einer vorbestimmten Zeit nach Erzeugung des genannten Abnutzungs-Erfassungssignals erzeugt wird.

7. Drahtbruch-Erfassungssystem nach Anspruch 6, mit vergleichenden Mitteln (15, 36, 37), die betreibbar sind, um ein erstes Signal zu erzeugen, wenn die genannten Digitaldaten über die Funkenposition unter dem genannten unteren Grenzwert liegen, und ein zweites Signal, wenn die genannten Digitaldaten über die Funkenposition über einem oberen Grenzwert liegen, und worin die genannten Einspeiseteil-Abnutzungs-Erfassungsmittel eine logische Schaltung (76, 77, 78, 79) aufweisen, die auf das genannte erste und zweite Signal anspricht, um ein Oben-/Unten-Signal zu erzeugen, das eine Aussage darüber liefert, ob das Abnutzungssignal ein Ergebnis der Abnutzung des genannten oberen elektrischen Einspeiseteils, des genannten unteren elektrischen Einspeiseteils oder beider ist.

8. Drahtbruch-Erfassungssystem nach Anspruch 7, ferner mit einer Anzeige (7), und worin die genannten AbnutzungsDiskriminierungsmittel betreibbar sind, um die genannte Anzeige zu betreiben, um den Abnutzungszustand des genannten Einspeiseteils anzuzeigen und/oder anzuzeigen, welches vom oberen und/oder unteren Einspeiseteil abgenutzt ist.

9. Drahtbruch-Erfassungssystem nach Anspruch 8, worin der Kontakt zwischen dem genannten oberen und unteren elektrischen Einspeiseteil und der genannten Drahtelektrode ein Gleitkontakt ist, und ferner mit Mitteln (7D), die auf das genannte Abnutzungs-Erfassungssignal und/oder das genannte Oben-/Unten-Signal ansprechen, um die Lage mindestens einer der genannten, elektrischen Einspeiseteile relativ zur genannten Drahtelektrode einzustellen, wodurch eine neue Lage des Gleitkontakts zwischen dem genannten, mindestens einen elektrischen Einspeiseteil und der genannten Drahtelektrode hergestellt ist.

## Revendications

1. Dispositif de détection de la rupture du fil pour une machine d'usinage par électro-érosion avec découpe par fil, ladite machine comprenant un fil électrode renouvelable (1) pouvant se déplacer dans sa direction axiale à travers une zone de travail de ladite machine, dans laquelle on peut positionner une pièce (2) à usiner, ledit fil électrode étant maintenu sous tension et en contact avec des éléments d'alimentation électriques supérieur et inférieur (3, 4) disposés respectivement de part et d'autre de ladite zone de travail, et dans laquelle, pendant l'usinage, ladite pièce est espacée du fil électrode dans ladite zone de travail par un intervalle de travail (9) en travers duquel sont appliquées des impulsions d'usinage afin de produire des décharges d'étincelles entre ledit fil électrode et ladite pièce, ledit dispositif de détection étant caractérisé par :
des détecteurs de courant (8, 9) pour détecter le courant circulant à travers un ou les deux éléments d'alimentation électrique;
un moyen de détection de la position d'étincelle (11) pour amplifier la valeur du courant détecté en provenance desdits détecteurs de courant et pour produire des signaux correspondant à la position de décharge d'étincelle dans la direction axiale du fil électrode;
une unité arithmétique de données numériques (12) pour convertir les signaux de position de décharge d'étincelle en provenant dudit moyen de détection de position d'étincelle en données numériques;
un moyen d'ajustage (34, 35) pour fixer des valeurs limites supérieure et inférieure des données numériques correspondant aux positions des surfaces supérieure et inférieure d'une pièce à usiner;
un moyen (36, 37) pour comparer les données numériques représentatives de la position d'étincelle avec lesdites valeurs limites supérieure et inférieure;
un moyen générateur de position d'étincelle (15) pour produire un signal indicatif d'une position d'étincelle, ledit moyen générateur de position d'étincelle étant sensible a une valeur de données numériques de position d'étincelle supérieure à ladite valeur limite supérieure ou inférieure à ladite valeur limite inférieure, pour produire un signal indiquant qu'une décharge d'étincelle se trouve à l'extérieur de l'épaisseur de ladite pièce; et
un moyen de discrimination de fil brisé (16), sensible auxdits signaux indiquant que la position d'étincelle se trouve à l'extérieur de l'épaisseur de la pièce pour produire un signal de rupture de fil.

2. Dispositif de détection de rupture de fil selon la revendication 1, comprenant un circuit de maintien de pic comprenant des premier et deuxième circuits de maintien de pic (17, 18) sensibles auxdits détecteurs de courant supérieur et inférieur respectivement, et dans lequel le moyen de détection de position d'étincelle comprend un amplificateur différentiel (27) servant à extraire un signal indicatif de la différence entre les valeurs de courant de pic maintenues par les circuits de maintien de pic afin de produire ainsi un signal de position d'étincelle.

3. Dispositif de détection de rupture de fil selon la revendication 2, dans lequel lesdites impulsions d'usinage sont produites au moyen d'un signal d'impulsion de grille, et comprenant en outre un moyen (12) pour produire un signal de synchronisation légèrement retardé dans le temps par rapport à la terminaison dudit signal d'impulsion de grille, ledit signal de synchronisation étant entré dans ladite unité arithmétique de données numériques pour minuter la conversion dudit signal de différence en lesdites données numériques.

4. Dispositif de détection de rupture de fil selon la revendication 3, comprenant en outre un moyen d'amplification (31) pour amplifier ledit signal de différence, ledit moyen d'amplification ayant des moyens (TR3) pour en faire varier le facteur d'amplification, d'où il résulte que ledit signal de position d'étincelle est amplifié en fonction de conditions de travail prédéterminées.

5. Dispositif de détection de rupture de fil selon l'une des revendications précédentes, dans lequel ledit moyen générateur de position d'étincelle est sensible au fait qu'une valeur de données numériques de position d'étincelle est inférieure à ladite valeur limite supérieure et supérieure à ladite valeur limite inférieure pour produire un signal indicatif d'une décharge d'étincelle entre ladite pièce à usiner et ledit fil électrode, ledit circuit de discrimination de fil brisé (16) comprenant un compteur (44) pour compter le nombre desdits signaux indiquant qu'une décharge d'étincelle est à l'extérieur de l'épaisseur de la pièce pour produire ledit signal de rupture de fil lorsque ledit compte atteint une valeur prédéterminée, ledit compteur étant mis en oeuvre, en réponse à un signal indicatif d'une décharge d'étincelle entre le fil électrode et la pièce à usiner, pour remettre ledit compte à zéro.

6. Dispositif de détection de rupture de fil selon l'une des revendications précédentes, comprenant en outre un moyen détecteur d'usure (70), sensible à la production dudit signal indiquant qu'une décharge d'étincelle est à l'extérieur de l'épaisseur de la pièce après la production dudit signal indicatif d'une décharge d'étincelle entre ledit fil électrode et ladite pièce, pour produire un signal indicatif d'une usure d'au moins l'un desdits éléments d'alimentation électrique supérieur et inférieur, et un moyen de discrimination d'usure (80), sensible auxdits moyens de détection d'usure, pour produire un signal d'usure d'éléments d'alimentation en réponse à un signal de détection d'usure si aucun signal de fil brisé n'est produit par ledit moyen de discrimination de fil brisé dans un laps de temps prédéterminé après la production dudit signal de détection d'usure.

7. Dispositif de détection de rupture de fil selon la revendication 6, comprenant un moyen de comparaison (15, 36, 37) servant à produire un premier signal si lesdites données numériques de position d'étincelle sont inférieures à ladite valeur limite inférieure et un deuxième signal si lesdites données numériques de position d'étincelle sont supérieures à la valeur limite supérieure, et dans lequel ledit moyen de détection d'usure d'éléments d'alimentation comprend un circuit logique (76, 77, 78, 79) sensible auxdits premier et deuxième signaux pour produire un signal haut/bas indiquant si le signal d'usure est le résultat de l'usure dudit élément d'alimentation électrique supérieur, dudit élément d'alimentation électrique inférieur, ou des deux.

8. Dispositif de détection de rupture de fil selon la revendication 7, comprenant en outre un affichage (7) et dans lequel ledit moyen de discrimination d'usure peut être mis en oeuvre pour exciter ledit affichage pour indiquer ledit statut d'usure d'éléments d'alimentation et/ou lequel desdits éléments d'alimentation supérieur et/ou inférieur est usé.

9. Dispositif de détection de rupture de fil selon la revendication 8, dans lequel le contact entre lesdits éléments d'alimentation électrique supérieur et inférieur et ledit fil électrode est un contact glissant, et comprenant en outre des moyens (7D), sensibles audit signal de détection d'usure et/ou audit signal haut/bas pour régler la position d'au moins l'un des éléments d'alimentation électrique par rapport audit fil électrode, d'où il résulte qu'il est établi un nouveau cycle de contact glissant entre le ou les éléments d'alimentation électrique et ledit fil électrode.
